# EUROPÄISCHE PATENTANMELDUNG

(11) **EP 3 940 553 A1**
(43) Veröffentlichungstag der Anmeldung: **19.01.2022**
(21) Anmeldenummer: 21185988.9
(22) Anmeldetag: 16.07.2021
(51) Int. Cl.: G06F 16/84, G06F 11/36

(54) **VERFAHREN ZUM BEREITSTELLEN SICHERHEITSRELEVANTER DATEN MITTELS EINES SERVERSYSTEMS, SERVERSYSTEM UND COMPUTERPROGRAMMPRODUKT**

(30) Priorität: 16.07.2020 DE 102020118832
(71) Anmelder: simply running systems GmbH & Co. KG, 48301 Nottuln (DE)
(72) Erfinder: Sasse, Joachim, 48301 Nottuln (DE)
(74) Vertreter: Eisenführ Speiser

(57) **Zusammenfassung**

Die vorliegende Erfindung betrifft ein Verfahren zum Bereitstellen von sicherheitsrelevanten XML-Daten mittels eines Serversystems, das ein Großrechner im Bereich von Finanzdienstleistungen ist, umfassend:
a) Festlegen und Konfigurieren, auf einem Nutzerendgerät in einem Regelmodul (70), von Anforderungen hinsichtlich zumindest einer Vorgabe für die sicherheitsrelevanten XML-Daten, wobei die zumindest eine Vorgabe ein XSD Schema umfasst,
b) Festlegen und Konfigurieren, auf dem Nutzerendgerät in dem Regelmodul (70), von abgewandelten Anforderungen basierend auf der Anforderung,
c) Erzeugen, auf dem Nutzerendgerät, einer Testanwendung umfassend das Regelmodul (70) und ein Mapmodul (80) basierend auf dem Festlegen und dem Konfigurieren der abgewandelten Anforderungen, wobei das Mapmodul eingerichtet ist, die sicherheitsrelevanten XML-Daten unterschiedlichen Kategorien zuzuweisen,
d) Übermitteln der Testanwendung an einen Server,
d1) Compilieren der Testanwendung auf dem Server,
e) Ausführen (S1), durch den Server mittels eines Steuerungsmoduls (50), der Testanwendung umfassend das Regelmodul (70) und das Mapmodul (80) zur Durchführung eines Funktionstests, wobei:
e1) das Steuermodul einen Parser (60), zum Parsen der sicherheitsrelevanten XML-Daten aufruft (S2), wobei der Parser zum Parsen der sicherheitsrelevanten XML-Daten das Regelmodul (70) aufruft (S3) und der Parser die geparsten sicherheitsrelevanten XML-Daten, durch Abgleich der XML-Tags mit dem Regelwerk des Regelmoduls, validiert,
e2) wobei im Anschluss die Kontrolle an das Steuermodul (50) zurückgegeben wird, wobei ein Funktionsergebnis erhalten wird (S4), e3) das Steuermodul das Mapmodul zur Bestückung der Datenstrukturen aufruft (S5),

f) Übermitteln des Funktionstestergebnisses an das Nutzerendgerät,
in Abhängigkeit des Funktionstestergebnisses,
g1) Akzeptieren der abgewandelten Anforderungen als Anforderungen, auf dem Nutzerendgerät, oder
g2) Anpassen der abgewandelten Anforderungen ausgehend von den abgewandelten Anforderungen, auf dem Nutzerendgerät,

h) Erzeugen, durch das Nutzerendgerät, einer Endanwendung, umfassend ein Regelmodul (70) und ein Mapmodul (80), basierend auf dem Festlegen und dem Konfigurieren der Anforderungen, um eine Endanwendung zu erzeugen, und
i) Übermitteln, durch das Nutzerendgerät, der Endanwendung an den Server.

## Beschreibung

Die vorliegende Erfindung betrifft ein Verfahren zum Bereitstellen von sicherheitsrelevanten Daten mittels eines Serversystems, ein zugehöriges System zum Bereitstellen von sicherheitsrelevanten Daten sowie ein zugehöriges Computerprogrammprodukt. Die vorliegende Erfindung ist insbesondere im Bereich des Zahlungsverkehrs für Großrechner einsetzbar.

Insbesondere durch einen Großrechner im Bankwesen (z.B. Z/OS 390) werden ein- und ausgehende XML-Daten kontinuierlich überprüft und verarbeitet, wobei der Großrechner die verarbeiteten XML-Daten an nach- oder vorgelagerte Datenstrukturen übergibt.

In der konventionellen Datenverarbeitung von permanent ein- und ausgehenden XML-Daten muss der fachliche Anwender im Vorfeld genau definieren, wie der Programmierer mit diesen Daten umgehen soll, damit diese den individuellen Kundenanforderungen sowie regulatorischen Anforderungen entsprechen.

### Begriffsdefinition

XML steht für Extensible Markup Language und ist eine Auszeichnungssprache zur Darstellung hierarchisch strukturierter Daten im Format einer Textdatei, die sowohl von Menschen als auch von Maschinen lesbar ist

Ein XSD Schema ist eine Empfehlung des W3C (World Wide Web Consortium) zum Definieren von Strukturen für XML-Dokumente.

Ein Parser ist ein Computerprogramm und für die Zerlegung, Umwandlung und Weiterverarbeitung von Datenformaten zuständig.

Ein fachlicher Anwender verfügt über Kenntnisse der grundsätzlichen Datenstrukturen des XML-Formates als auch den vor- und nachgelagerten Datenstrukturen seines Unternehmens aus, über welche die XML-Daten verarbeiten sollen. Der fachliche Anwender verfügt jedoch nicht über Programmierkenntnisse.

Ein Programmierer kann durch exakt formulierte Vorgaben des fachlichen Anwenders einen Programmcode erstellen. Er stellt den korrekten, validierten Datenaustausch zwischen XML-Daten und kundeneigenen Datenstrukturen sicher.

### Konventioneller Arbeitsablauf (Stand der Technik)

Der fachliche Anwender definiert für den Programmierer die Anforderungen für die ein- und ausgehenden XML-Datenstrukturen (z.B. ausgehende XML-Daten für SEPA Überweisungen (pain 001.001.03)). Die Datenstrukturen des Kunden müssen so verarbeitet werden, dass alle notwendigen Werte, die im XSD Schema, zum Beispiel der SEPA Überweisung (www.ebics.de) gefordert sind, in der SEPA Überweisung (ausgehendes XML-Format) enthalten und validiert sind.

Der fachliche Anwender formuliert eine schriftliche, notwendigerweise exakte Arbeitsanweisung für jedes XSD Schema mit hohem zeitlichem Einsatz und dem Potential menschlicher Fehler, um den Programmierer umfassend für seine Programmierarbeit zu informieren.

Der fachliche Anwender übergibt nun das erarbeitete Fachkonzept, das sich aus der XSD-Datenstruktur und Verarbeitungsanforderungen heraus ergibt, an den Programmierer und stimmt die finalen Anforderungen und etwaige Fragen zwecks Umsetzung ab. Nach diesen Vorgaben erfolgt nun die Programmierung der entsprechenden XSD-Mapping-Anwendung für den Großrechner. Diese Programmierung ist in der Regel sehr aufwendig und nimmt viel Zeit in Anspruch.

Nach Fertigstellung dieser Anwendung führen fachlicher Anwender und Programmierer zusammen erste Funktionstests durch, um ggf. auftretende Fehler zu identifizieren und zu beheben. Dieser Vorgang (Feedbackschleife) wiederholt sich solange, bis alle Vorgaben und Anforderungen erfüllt wurden. (Beispiel: interne Datenstruktur / XML - Format SEPA Überweisung (pain 001.001.03).

Mit weiteren Aktualisierungs- / Änderungsanforderungen sowie neuen XSD Schemata beginnt der dargestellte Arbeitsprozess von vorne.

Durch die hohe Anzahl unterschiedlicher XSD Schemata und die hohe Frequenz von Änderungen entsteht ein hoher Arbeitsaufwand mit vielen möglichen Quellen für Fehler.

Besonders relevant ist die unter der Bezeichnung UNIFI (ISO 20022) bekannte Spezifikation für die Finanzwirtschaft. UNIFI ist das Akronym für UNIversal Financial Industry message scheme. ISO 20022 - es beinhaltet ein logisches Datenmodell, organisationsübergreifende Workflows sowie entsprechende Nachrichtentypen. Die Nachrichtentypen stehen als XSD-Dateien frei zur Verfügung.

Als Beispiel wird ein XSD Schema "pain.001.001,03_GBIC_3.xsd", das Schema für die SEPA-Überweisung, herangezogen. Sämtliche Felder dieses XSD Schema müssen vom fachlichen Anwender analysiert werden, damit eine SEPA-Überweisung später auf dem Großrechner - nach Erstellung des Programmcodes (XSD-Mapping-Anwendung) durch den Programmierer - geparst und validiert, also korrekt verarbeitet werden kann.

Ein "Muss-Feld" mit der Bezeichnung "CdtrAcct" findet sich in Zeile 115 des Beispiels und enthält die IBAN des Zahlungsempfängers:
Zeile 115: <xs:element name="CdtrAcct" type="CashAccountSEPA2"/>

Dieses Feld muss befüllt sein und darf exakt nur einen Wert enthalten. Dabei muss dieses Feld in der späteren Verarbeitung auf dem Großrechner auch validiert, also inhaltlich auf korrekte Angaben geprüft werden: Eine deutsche IBAN beginnt immer mit DE und ist immer 22-stellig. Eine französische IBAN beginnt immer mit FR und ist immer 27-stellig.

In der Validierung des Parsers muss also das Muss-Feld "CdtrAcct" dynamisch auf den jeweiligen ISO Code des Landes (DE, FR, IT,...) reagieren und die variable Feldlänge validieren.

Der fachliche Anwender muss für dieses Element exakte Vorgaben für den Programmierer erarbeiten, wie dieses Element in der Verarbeitung der XSD-Mapping-Anwendung zu behandeln ist.

Ein "Kann-Feld" mit der Bezeichnung Ustrd findet sich in Zeile 464 des Beispiels und enthält den Verwendungszweck zur SEPA-Überweisung:
Zeile 464: <xs:element name="Ustrd" type="Max140Text"/>

Dieses Feld kann, muss jedoch nicht befüllt werden und hat eine maximale Länge von 140 Textzeichen. Wenn es befüllt wird, muss der Inhalt auf dem Großrechner verarbeitet und auf das richtige Format Text vom Parser validiert werden. Der fachliche Anwender muss für dieses Element exakte Vorgaben für den Programmierer (XSD-Mapping-Anwendung) erarbeiten, wie dieses Element in der XSD-Mapping-Anwendung zu behandeln ist.

Dieses kurze Beispiel mit nur zwei Feldern aus diesem einen XSD Schema soll zeigen, dass die Arbeit des fachlichen Anwenders mit hoher Fachkenntnis über das gesamte Schema zu erbringen ist.

In diesem einen XSD der SEPA Überweisung müssen 112 Elemente er- bzw. bearbeitet werden und der gesamte Kontext des XSD Schema vom fachlichen Anwender durchdacht werden. Fehler sind sicherheitskritisch, so dass die Anzahl der Iterationen und Tests je XSD Schema hoch ist.

Der Artikel F. Zhu, S. Rayadurgam und Wei-Tek Tsai: "Automating Regression Testing for Real-time Software in a Distributed Environment", Proceedings First International Symposium on Object-Oriented Real-Time Distributed Computing (ISORC '98), Kyoto, Japan, 1998, S. 373-382, beschreibt, dass viele Echtzeitsysteme sich im Laufe der Zeit aufgrund neuer Anforderungen und technologischer Verbesserungen weiterentwickeln. Jede Revision erfordert eine Regressionspause, um sicherzustellen, dass die vorhandene Funktionalität nicht durch solche Änderungen beeinträchtigt wird. Das Testen dieser Systeme erfordert oft spezielle Hardware und Software, und beides ist teuer. Während der gesamte Regressionstestprozess in verschiedenen Organisationen ähnlich ist, variieren die Strategien und Tools, die von ihnen verwendet werden, je nach ihren Produktanforderungen. Daher sollte ein gutes Framework für Regressionstests die Flexibilität bieten, es je nach den Anforderungen der jeweiligen Organisation zu konfigurieren und gleichzeitig die Auslastung zu maximieren. Manuelle Prozesse sind in der Regel langsam und fehleranfällig und führen zu einer Unterauslastung wertvoller Testressourcen. Der Artikel schlägt ein automatisiertes verteiltes Regressionstest-Framework vor, das dem Benutzer Flexibilität bietet, es nach seinen Bedürfnissen zu konfigurieren und gleichzeitig die Ressourcennutzung zu optimieren.

Vor diesem Hintergrund war es eine Aufgabe der vorliegenden Erfindung, sicherheitsrelevante Daten, insbesondere im Bereich von Finanztransaktionen, vereinfacht und weniger fehleranfällig bereitzustellen.

Die Aufgabe wird erfindungsgemäß durch ein Verfahren zum Bereitstellen von sicherheitsrelevanten Daten mittels eines Serversystems gelöst.

Das Verfahren umfasst zunächst ein Festlegen und Konfigurieren, auf einem Nutzerendgerät, von Anforderungen hinsichtlich zumindest einer Vorgabe für die sicherheitsrelevanten Daten.

Die Vorgabe für die sicherheitsrelevanten Daten sind vorzugsweise die Informationen, die der fachliche Anwender typischerweise für ein XSD Schema durchdenkt. Das Verfahren sieht hierfür eine Schnittstelle auf dem Nutzerendgerät vor, mittels der beispielsweise der fachliche Anwender Anforderungen hinsichtlich der Vorgabe für die sicherheitsrelevanten Daten festlegen und konfigurieren kann. Beispielsweise kann eine Verknüpfung zwischen der Vorgabe und Datenbanken oder ähnliches erfolgen.

Das Verfahren umfasst weiter ein Festlegen und Konfigurieren, auf dem Nutzerendgerät, von abgewandelten Anforderungen basierend auf der Anforderung. Es wird somit der bereits bestehende Satz von Anforderungen herangezogen und auf dieser Basis abgewandelte Anforderungen erstellt. Am einfachsten kann in der Schnittstelle auf dem Nutzerendgerät eine Funktion vorbereitet sein, die ein Verändern der Anforderungen ermöglicht. Mit der Veränderung der Festlegung bzw. Konfiguration der Anforderungen kann in einem Fall auf Änderungen der Vorgabe reagiert werden. Auch können die Anforderungen beispielsweise auf Datenbankseite sich über die Zeit ändern.

Die Anforderungen sind vorzugsweise Anforderungen, die für eine frühere Version als funktionierend festgestellt und freigegeben sind. Auf Basis dieser Anforderungen ist es dann mit weniger Aufwand möglich, die angepassten Anforderungen für die Vorgabe zu realisieren. Anstatt sämtliche Anforderungen neu festzulegen, kann auf dem bereits bestehenden und insbesondere validierten Stand aufgebaut werden. Dadurch wird der Aufwand bei dem Festlegen und Konfigurieren der abgewandelten Anforderungen reduziert. Die abgewandelten Anforderungen können sich in einer oder mehreren einzelnen Anforderungen von den Anforderungen unterscheiden.

Das Verfahren umfasst weiter ein Erzeugen, auf dem Nutzerendgerät, einer Testanwendung basierend auf dem Festlegen und dem Konfigurieren der abgewandelten Anforderungen.

Bei der Testanwendung handelt es sich bereits um ein Programm, das vorzugsweise auf einem Finanzgroßrechner als Server ausführbar ist. Dieser Schritt stellt daher eine Umsetzung einer Programmierung dar, die aus den sicherheitsrelevanten Daten einen als Testanwendung ausführbaren Programmcode erzeugt. Für die Erstellung der Testanwendung sind keine Programmierkenntnisse erforderlich, so dass lediglich der fachliche Anwender zur Erstellung der Testanwendung ausreicht, was die Möglichkeit von Kommunikationsfehlern zwischen fachlichem Anwender und Programmierer vermeidet.

Die Testanwendung wird nicht für die festgelegten Anforderungen, sondern für die abgewandelten Anforderungen erstellt. Sie kann daher explizit zum Überprüfen der Funktion der Abwandlungen herangezogen werden. Erfindungsgemäß wird daher durch die auf abgewandelten Anforderungen basierende Testanwendung eine differenzielle Prüfung ermöglicht, insbesondere dann, wenn vorausgesetzt ist, dass eine auf den Anforderungen basierende (End-)Anwendung fehlerfrei ist.

Das Verfahren umfasst weiter ein Übermitteln der Testanwendung an einen Server. Der Server ist vorzugsweise ein Großrechner im Bereich von Finanzdienstleistungen.

Das Verfahren umfasst weiter ein Ausführen, durch den Server, der Testanwendung zur Durchführung eines Funktionstests. Bei dem Funktionstest wird ein Funktionstestergebnis erhalten.

Vorzugsweise aber nicht notwendigerweise ist die Testanwendung hierfür besonders ausgebildet, beispielsweise durch eingebaute Funktionen oder Routinen zur Durchführung eines Funktionstests. Hierfür können die Programmelemente der Testanwendung gegenüber einer finalen Endanwendung weitere Funktionen beinhalten, die zwar die Ausführgeschwindigkeit der Testanwendung verringern, dafür aber Informationen zur Fehlerbehebung und zum Test der Testanwendung zur Verfügung stellen. Der Server kann damit einen Beitrag dazu leisten, dass die vorzugsweise automatisch aus den sicherheitsrelevanten Daten erstellte Testanwendung ohne Schwierigkeiten auf dem Server selbst laufen kann.

Es ist aber auch möglich, dass die Testanwendung im Wesentlichen einer Endanwendung entspricht und nur die Ausführung auf dem Server beispielsweise in einem anderen Kontext erfolgt. In diesem Zusammenhang sind Testumgebungen, beispielsweise in Form einer Sandbox auf dem Server bekannt.

Im Vergleich zu der im bisher bekannten Ablauf durchgeführten Programmierung unterscheidet sich die Testanwendung also durch die zusätzlich programmierte Möglichkeit des Funktionstests in Zusammenarbeit mit dem Server, so dass ein Funktionstestergebnis erhalten wird.

Das Funktionstestergebnis wird dann an das Nutzerendgerät übermittelt.

In Abhängigkeit des Funktionstestergebnisses umfasst das Verfahren ferner ein Akzeptieren der abgewandelten Anforderungen als Anforderungen, auf dem Nutzerendgerät, oder ein Anpassen der abgewandelten Anforderungen ausgehend von den abgewandelten Anforderungen, auf dem Nutzerendgerät.

Im einfachsten Fall ist das Funktionstestergebnis dafür indikativ, dass die Testanwendung fehlerfrei ausgeführt wurde. Ein abweichendes Funktionstestergebnis kann anzeigen, dass die Testanwendung fehlerbehaftet ist. In bevorzugten Ausgestaltungen ermöglicht das Funktionstestergebnis eine Ausdifferenzierung des auftretenden Fehlers. Eine Anpassung der abgewandelten Anforderungen unmittelbar in Reaktion auf das Funktionstestergebnis vereinfacht die vorzugsweise iterative Festlegung und Konfiguration der abgewandelten Anforderungen, so lange, bis ein fehlerfreier Ablauf der Testanwendung auf dem Server ermöglicht ist.

In dem Fall, in dem das Funktionstestergebnis anzeigt, dass die Testanwendung fehlerfrei ausgeführt wird, kann das Nutzerendgerät automatisch oder nach Benutzereingabe die angepassten Anforderungen als Anforderungen bestätigen. Die Anforderungen werden letztlich in eine Endanwendung übersetzt und an den Server übertragen.

Die Erzeugung der Endanwendung, die also dann für den beispielsweise permanenten Einsatz auf dem Server ausgebildet ist, erfolgt also durch Zusammenwirkung von Nutzerendgerät und Server. Der Server erzeugt eine Antwort auf den Funktionstest, die dann zurück an das Nutzerendgerät übertragen wird. Auf Basis dieser Antwort ändert das Nutzerendgerät die Anwendung.

Schließlich umfasst das Verfahren ein Übermitteln, durch das Nutzerendgerät, der Endanwendung an den Server. Die Endanwendung entspricht in der Verarbeitung der sicherheitsrelevanten Daten der Testanwendung, so dass die Integrität der Datenverarbeitung bereits vorzugsweise automatisiert durch den Server überprüft und getestet ist.

Damit kann mit einem einfachen Arbeitsablauf, der den Server und das Nutzerendgerät sowie die Kommunikation dazwischen enthält, der bisherige Prozess vereinfacht und dessen Fehleranfälligkeit verringert werden. Hierzu ist erfindungsgemäß insbesondere die Rückkopplung von Server zu Nutzerendgerät durch eine besonders ausgestaltete Testanwendung, die sich von der Endanwendung unterscheidet, sowie die Durchführung des Funktionstests samt Rückmeldung dazu seitens des Servers verantwortlich.

Vorzugweise umfasst die Durchführung des Funktionstests ein Erzeugen, auf dem Server, einer Funktionsindikation für die Testanwendung, ein Übermitteln, an das Nutzerendgerät, der Funktionsindikation, ein Anpassen, durch das Nutzerendgerät, der zumindest einen Vorgabe für die sicherheitsrelevanten Daten in Antwort auf die Funktionsindikation, und ein Ändern, durch das Nutzerendgerät, der Testanwendung basierend auf dem Anpassen.

Vorzugsweise hebt das Nutzerendgerät Unterschiede zwischen festgelegten und konfigurierten Anforderungen sowie abgewandelten Anforderungen hervor.

Die Hervorhebung kann beispielsweise durch unterschiedliche Darstellung, beispielsweise in Form farblicher Hervorhebung, erfolgen. So ist für einen fachlichen Anwender jederzeit ersichtlich, ob sich gegenüber den vorzugsweise validierten und verifizierten Anwendungen Unterschiede ergeben, d.h. die abgewandelten Anforderungen, die gegebenenfalls noch nicht auf Funktionsfähigkeit überprüft wurden.

Vorzugsweise sind die Unterschiede auch in der Testanwendung, die beispielsweise mit der Programmiersprache COBOL erzeugt wird, beispielsweise in Form von Kommentaren erkennbar.

Vorzugsweise ermöglicht das Nutzerendgerät in Abhängigkeit des Funktionstestergebnisses ein Annehmen oder Revidieren der Unterschiede. Bei Annehmen der Unterschiede wird die abgewandelte Anforderung als neue Anforderung akzeptiert und die Hervorhebung dieser Anforderung entfällt. Bei einem Revidieren wird die Abwandlung verworfen und die bisherige Anforderung beibehalten ("Commit" oder "Rollback"). In beiden Fällen entfällt im Anschluss die Hervorhebung.

Vorzugsweise umfasst die Durchführung des Funktionstests ein Erzeugen, auf dem Server, des Funktionstestergebnisses für die Testanwendung, und ein Übermitteln, an das Nutzerendgerät, des Funktionstestergebnisses. Ferner umfasst die Durchführung des Funktionstests vorzugsweise ein Anpassen, auf dem Nutzerendgerät, der abgewandelten Anforderungen für die sicherheitsrelevanten Daten in Antwort auf das Funktionstestergebnis, und ein Ändern, durch das Nutzerendgerät, der Testanwendung basierend auf dem Anpassen.

Vorzugsweise umfasst das Funktionstestergebnis eine Fehlerindikation.

Vorzugsweise wird das Anpassen der Anforderungen in Echtzeit durchgeführt.

Vorzugsweise wird das Ändern der Testanwendung iterativ durchgeführt.

Vorzugsweise umfasst das Verfahren ferner ein Ausführen der Endanwendung auf dem Server, wobei das Ausführen der Endanwendung umfasst: Zuweisen der sicherheitsrelevanten Daten zu unterschiedlichen Kategorien, und Validieren von kategorisierten sicherheitsrelevanten Daten.

Vorzugsweise umfassen die sicherheitsrelevanten Daten XML-Daten, und die zumindest eine Vorgabe umfasst ein XSD Schema.

Erfindungsgemäß wird ferner ein System zum Bereitstellen von sicherheitsrelevanten Daten bereitgestellt, umfassend einen Server, und ein Nutzerendgerät. Das Nutzerendgerät ist eingerichtet zum Festlegen und Konfigurieren von Anforderungen hinsichtlich zumindest einer Vorgabe für die sicherheitsrelevanten Daten, Festlegen und Konfigurieren von abgewandelten Anforderungen basierend auf der Anforderung, Erzeugen einer Testanwendung basierend auf dem Festlegen und dem Konfigurieren der abgewandelten Anforderungen, Übermitteln der Testanwendung an einen Server, Erzeugen einer Endanwendung basierend auf dem Festlegen und dem Konfigurieren der Anforderungen, um eine Endanwendung zu erzeugen, und Übermitteln der Endanwendung an den Server. Der Server ist eingerichtet zum Ausführen der Testanwendung zur Durchführung eines Funktionstests, wobei ein Funktionstestergebnis erhalten wird, und Übermitteln des Funktionstestergebnisses an das Nutzerendgerät. Das Nutzerendgerät ist weiter eingerichtet, in Abhängigkeit des Funktionstestergebnisses, zum: Akzeptieren der abgewandelten Anforderungen als Anforderungen oder Anpassen der abgewandelten Anforderungen ausgehend von den abgewandelten Anforderungen.

Mit dem erfindungsgemäßen System sind korrespondierende Vorteile erreichbar, wie sie bereits mit Bezug auf das erfindungsgemäße Verfahren beschrieben wurden. Für das Verfahren beschriebene, bevorzugte Ausgestaltungen sind mit gleichen Vorteilen auf das erfindungsgemäße System übertragbar.

Vorzugsweise umfasst der Server ein Steuermodul, das eingerichtet ist, ein Funktionstestergebnis für die Testanwendung zu erzeugen, und eine Kommunikationsschnittstelle, die eingerichtet ist, das Funktionstestergebnis an das Nutzerendgerät zu übermitteln.

Vorzugsweise umfasst der Server ferner ein Zuweisungsmodul, welches eingerichtet ist, die sicherheitsrelevanten Daten zu unterschiedlichen Kategorien zuzuweisen, wobei das Steuermodul eingerichtet ist, die kategorisierten sicherheitsrelevanten Daten zu validieren.

Die Aufgabe wird erfindungsgemäß ferner durch ein Computerprogrammprodukt gelöst, das Programmcodemittel umfasst, die, wenn sie auf einer Prozessoreinheit ausgeführt werden, den Prozessor veranlassen, das erfindungsgemäße Verfahren auszuführen.

Weitere Vorteile werden nachfolgend unter Bezugnahme auf die beigefügte Zeichnung beschrieben. Hierbei zeigen:
- Fig. 1: schematisch und exemplarisch ein erfindungsgemäßes System,
- Fig. 2: schematisch und exemplarisch eine erste Nutzerschnittstelle,
- Fig. 3: schematisch und exemplarisch eine zweite Nutzerschnittstelle,
- Fig. 4: schematisch und exemplarisch eine dritte Nutzerschnittstelle,
- Fig. 5: schematisch und exemplarisch eine vierte Nutzerschnittstelle,
- Fig. 6: schematisch und exemplarisch eine fünfte Nutzerschnittstelle,
- Fig. 7: schematisch und exemplarisch eine sechste Nutzerschnittstelle,
- Fig. 8: schematisch und exemplarisch eine siebte Nutzerschnittstelle,
- Fig. 9: schematisch und exemplarisch eine achte Nutzerschnittstelle,
- Fig. 10: schematisch und exemplarisch eine neunte Nutzerschnittstelle,
- Fig. 11: schematisch und exemplarisch einen Auszug aus einem Regelwerk,
- Fig. 12: schematisch und exemplarisch eine Benutzeroberfläche,
- Fig. 13: schematisch und exemplarisch ein Detail der Benutzeroberfläche aus Fig. 12,
- Fig. 14: schematisch und exemplarisch eine zehnte Nutzerschnittstelle,
- Fig. 15: schematisch und exemplarisch eine elfte Nutzerschnittstelle,
- Fig. 16: schematisch und exemplarisch einen Auszug aus einem Regelwerk des Mapmoduls,
- Fig. 17: schematisch und exemplarisch eine zwölfte Nutzerschnittstelle,
- Fig. 18: schematisch und exemplarisch einen Auszug aus einem Template-File.

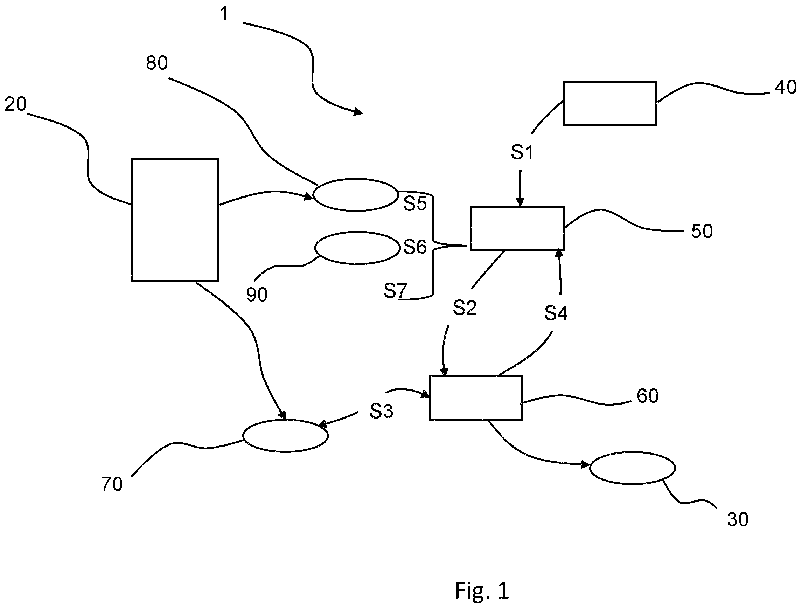

Fig. 1 zeigt schematisch und exemplarisch ein erfindungsgemäßes System 1. Über eine auf einem Nutzerendgerät, beispielsweise einem Smartphone, einem PC, einem Laptop etc. dargestellte Schnittstelle 20 (Cockpit) definiert der fachliche Anwender die Anforderungen und konfiguriert dann die ein- und ausgehenden XML-Datenstruktur 30 (z.B. Ausgehende XML-Daten für SEPA Überweisungen (pain 001.001.03). Pro XSD Schema können vorzugsweise individuelle Zuordnungen und Setups festgelegt werden. Dies stellt ein Beispiel des Festlegens und Konfigurierens sicherheitsrelevanter Daten dar.

Nach Fertigstellung der Konfiguration durch den fachlichen Anwender wird die neue Anwendung per Knopfdruck innerhalb Sekunden vorzugsweise automatisch generiert und an einen Server 10 (Master) übertragen. Vorzugsweise wird hierfür eine separate Testumgebung auf dem Server, beispielsweise ein Großrechner Z/OS 390, bereitgestellt.

Auf dem Server (Master) führt der fachliche Anwender dann erste Funktionstests der Software durch, um ggf. auftretende Fehler zu identifizieren. Das Funktionstestergebnis wird nach dem Durchführen der Funktionstests an den fachlichen Anwender, d.h. an das Nutzerendgerät, übermittelt.

Dieser Vorgang (Feedbackschleife) wiederholt sich solange, bis alle Vorgaben und Anforderungen ordnungsgemäß erfüllt wurden. (bspw. interne Datenstruktur / XML - Format SEPA Überweisung pain 001.001.03).

Hierin besteht ein zentraler Vorteil der vorliegenden Erfindung. Die Rückmeldung des Servers 10 auf die Funktionstests ist unmittelbar geeignet, eine Verbesserung der Vorgaben für die sicherheitsrelevanten Daten und damit der Anwendung zu ermöglichen, die im Ergebnis zur Vermeidung von Fehlern beiträgt.

Sind alle Vorgaben und Anforderungen erfüllt, wird durch das Nutzerendgerät 20 eine Endanwendung erstellt, die an den Server 10 übertragen und vorzugsweise auf dem Großrechner live geschaltet wird.

Der fachliche Anwender erlangt demnach durch die auf dem Nutzerendgerät bereitgestellte Schnittstelle 20 maximale Kompetenz- und Handlungsfähigkeit, da er die XML-Programmiertätigkeiten individuell, sofort, veränderbar und versionierbar zur Verfügung gestellt bekommt.

Der fachliche Anwender benötigt zudem keine individuellen Kompetenzen auf Grund von speziellen Anforderungen der Großrechner-Hardware-Struktur (z. B. Z/OS 390). Sein bestehendes Fachwissen allein reicht aus, um die komplette Steuerung seiner XSD Schemata auf dem HOST protokolliert, versioniert und ständig aktualisierbar zu verwalten.

Der fachliche Anwender muss sich nicht mehr mit dem Programmierer abstimmen, vermeidet so Kommunikations- / Übertragungsfehler und stellt eine fehlerfreie automatisierte Programmierung und Übertragung zwischen Nutzerendgerät 20 und Server 10, insbesondere Großrechner, sicher.

Die nachfolgenden Punkte beschreiben in der Reihenfolge einen beispielhaften Ablauf des XML-Parsing Prozesses auf dem Mainframe/Host als Beispiel eines Servers 10. Bestimmte Module, in diesem Beispiel ein Regelmodul 70 und ein Mapmodul 80, werden vorher auf dem Nutzerendgerät 20 generiert, dann zum Host transferiert (z. B. über FTPS), auf dem Host compiliert, um dann in einem Steuerungsmodul 50 aufgerufen werden zu können. Die Zusammenschau der auf dem Nutzerendgerät 20 generierten Module 70, 80 werden erfindungsgemäß als Testanwendung bzw. Endanwendung bezeichnet. Hierbei ist es unerheblich, ob die jeweilige Anwendung als ein einziges Programmprodukt oder als mehrere (Teil-)Programme, also Module 70, 80, umgesetzt sind.

Zunächst wird ein Host-Job 40 auf dem Server 10 (z. B. IBM Z/OS 390) gestartet. Hierfür wird beispielsweise ein Batchjob auf dem Server 10 gestartet und ein Steuerungsmodul 50, beispielsweise ein Cobol Steuerungsmodul, das den Ablauf des gesamten Parsingprozesses sowie die Weiterverarbeitung der geparsten XML-Daten steuert, in einem Schritt S1 ausgeführt.

Dieses Steuerungsmodul 50 ruft in diesem Beispiel in einem Schritt S2 ein Parsermodul 60 mit der gewünschten Funktion auf, die hier beispielsweise das Parsen von XML-Daten ist.

Das Parsermodul erhält die Datenstruktur 30 und ruft in einem Schritt S3 das passende Regelmodul 70 zum Parsen der Datenstruktur auf. Bei dem Regelmodul 70 kann es sich, je nach Betriebszustand, um ein Modul der Endanwendung oder der Testanwendung handeln. Das Steuerungsmodul 50 ist dafür ausgelegt, in dem Fall der Testanwendung einen Funktionstest des Regelmoduls 70 mittels des Parsermoduls 60 durchzuführen.

Nach Ausführen des Parsermoduls 60 unter Einbeziehung des Regelmoduls 70 wird die Kontrolle in einem Schritt S4 an das Steuerungsmodul 50 zurückgegeben, wobei Funktionstestergebnisse des Funktionstests zur Verfügung stehen. Diese können protokolliert werden und an das Nutzerendgerät 20 übermittelt werden.

Als Ausgabe des Parsermoduls 60 stehen die geparsten XML-Daten 30 in einer geordneten Struktur gemäß dem Regelmodul 70 zur Verfügung. Beispielsweise wird so aus einem Datenpooll eine verkettete Liste zur weiteren Verarbeitung erzeugt. Diese Daten können nun durch ein ebenfalls von dem Steuerungsmodul 50 in einem Schritt S5 aufgerufenes, passendes Mapmodul 80 weiterverarbeitet werden. Bei dem Mapmodul 80 handelt es sich ebenfalls, je nach Betriebsposition, um einen Teil der Testanwendung oder um einen Teil der Endanwendung.

Vorzugsweise wird ein Verweis auf das passende Mapmodul 80 im Sinne eines individuellen Exit durch das Parsermodul 60 geliefert, da dieser über das gelesene Regelwerk Kenntnis besitzt.

Die Erzeugung der Testanwendung bzw. der Endanwendung umfassend in diesem Beispiel ein Regelmodul 70 und ein Mapmodul 80 erfolgt vorzugsweise vollständig automatisch auf dem Nutzerendgerät 20, wird dann zum Host transferiert und vor der Nutzung compiliert.

In dem gesamten Ablauf ist es möglich weitere Exitbausteine 90 (generierte Module) zur Verfügung zu stellen, die dann ebenso gezielt aufgerufen werden können (wie Mapmodul 80), um entsprechende Aufgaben / Probleme zu lösen (z. B. Cross-Referenz Plausi Bankmodul). Diese können ebenfalls in den erfindungsgemäßen Ablauf als Teil der Testanwendung bzw. Endanwendung eingebunden sein.

Das Parsermodul 60 liest einmalig über ein entsprechendes Regelmodul 70 das zutreffende XSD-Regelwerk für das zu verarbeitende XML-Dokument ein. Das zugehörige Regelwerk des Parsermoduls 60 sucht über identifizierende Namespace Daten, die im XML-Stream vorhanden sein müssen, ansonsten gibt es aussagekräftige Fehlermeldungen.

Das Regelmodul 70 wird vorher vollständig im auf dem Nutzerendgerät 20 generiert und dann zum Host transferiert. Das Regelmodul 70 muss vor Nutzung vorzugsweise compiliert werden.

Das Regelwerk-Script basiert auf einer einfachen Spezifikationssprache mit Schlüsselwörtern, die das Parsermodul 60 kennt. Es repräsentiert die zutreffende XSD-Spezifikation (XSD Schema) zur entsprechender XML-Datei mit angereicherten Parametern (z. B. Callback=0), die zur Gesamtverarbeitung von Vorteil sind.

Das Regelwerk-Script wird vom Parsermodul 60 vorzugsweise rekursiv gescannt (gelesen), um alle Objekte (Tags) zu erhalten und diese in ein sehr schnell zu verarbeitendes, internes Format zu überführen.

Dabei handelt es sich beispielsweise um Instanzen einer Klasse, die alle miteinander horizontal als auch vertikal miteinander verknüpft sind (interne Adr.-Pointer). Diese erstellte Objektstruktur bildet die Basis für eine ultraschnelle validierende XML-Verarbeitung. Dieser Prozess findet wie oben erwähnt vorzugsweise nur einmalig statt.

Das Parsermodul liest und parst alle XML-Daten bis zu einem definierten Synchronisationspunkt (z. B. Umsatz) und übergibt dann die Verarbeitungskontrolle vorerst wieder an das Steuerungsmodul 50 zurück. Dieser Synchronisationspunkt wird im Regelwerk durch einen Parameter "CALLBACK=RC" definiert. Das Parsermodul 60 ist dadurch in der Lage, seine Arbeit zu unterbrechen und die Kontrolle an das Steuerungsmodul 50 abzugeben.

Dieses kann dann den Callback-Code auswerten und damit gezielte Gruppenwechsel-Steuerungen elegant vornehmen (z. B. neuer Sammler, neuer Umsatz etc.). Bei einem besonders vorteilhaften Parsermodul 60 handelt es sich um einen hocheffizienten Pull-Mehrschritt-Parser, bei der das Steuerungsmodul 50 die Kontrolle über den eigentlichen Parserprozess behält. Nach Anforderung seitens des Steuerungsmodul 50 s (Aufruf Parser) erhält dieser die Kontrolle zurück, wenn eine syntaktische Einheit geparst ist (Callback-Code).

Die geparsten XML-Daten stehen nun in einer geordneten Struktur, beispielsweise Datenpool -> verkettete Liste, zur Verfügung und können durch den Aufruf eines Exit-Bausteins weiterverarbeitet werden. Das Parsermodul 60 validiert alle XML-Tags gegen das Regelwerk - Inhalte der Tags werden ebenso nach der vorhandenen Regel validiert (z. B. regulärer Ausdruck). Das Ergebnis dieser Validierung wird ebenfalls mit den geparsten Daten zur Verfügung gestellt.

Anschließend ruft das Steuerungsmodul 50 in dem Schritt S5 das Mapmodul 80 zur Bestückung der Datenstrukturen auf.

Erhält das Steuerungsmodul 50 die Kontrolle vom Parsermodul 60 zurück - alle Tags zu einer syntaktischen Einheit sind geparst - ruft dieses dann das erhaltene Mapmodul 80 auf, um die geparsten XML-Daten auf die individuellen Datenstrukturen zu bestücken (siehe Customizing im PC-Cockpit). Die geparsten XML-Daten stehen in einer geordneten Struktur (Datenpool -> verkettete Liste) zur Verfügung und können nun durch den Aufruf des Mapmoduls 80 weiterverarbeitet werden.

Das Steuerungsmodul 50 kann nun in einem Schritt S6 den individuellen Buchungs-Baustein (firmenspezifisch) mit den zuvor bestückten Datenstrukturen aufrufen, um die geparsten Daten in das firmenspezifische Verarbeitungssystem zu speichern bzw. weiter zu verarbeiten, wenn es sich um die Endanwendung handelt. In dem Fall, in dem die Anwendung noch in der Testphase ist, wird vorzugsweise das Funktionstestergebnis an das Nutzerendgerät 20 übermittelt.

Das Steuerungsmodul 50 ruft in einem Schritt S7 dann wiederum das Parsermodul 60 auf, bis alle XML-Daten verarbeitet sind bzw. ein Parserfehler aufgetreten ist. Es kann aber auch den Parserprozess in bestimmten Fällen selbst beenden, wenn nicht alle XML-Daten geparst werden müssen.

Während das Beispiel für das Parsen von XML-Daten beschrieben ist, so ist selbstverständlich eine abweichende Implementierung, die die erfindungsgemäße iterative Entwicklung unter Verwendung des Funktionstestergebnisses umsetzt, vorstellbar.

Während in diesem Beispiel die Testanwendung bzw. die Endanwendung Regelmodule 70 und Mapmodule 80 sowie gegebenenfalls weitere Exitbauteile 90 umfassen, ist in anderen Implementierungen auch eine nur aus einem oder aus mehreren Modulen aufgebaute Testanwendung bzw. Endanwendung vorstellbar.

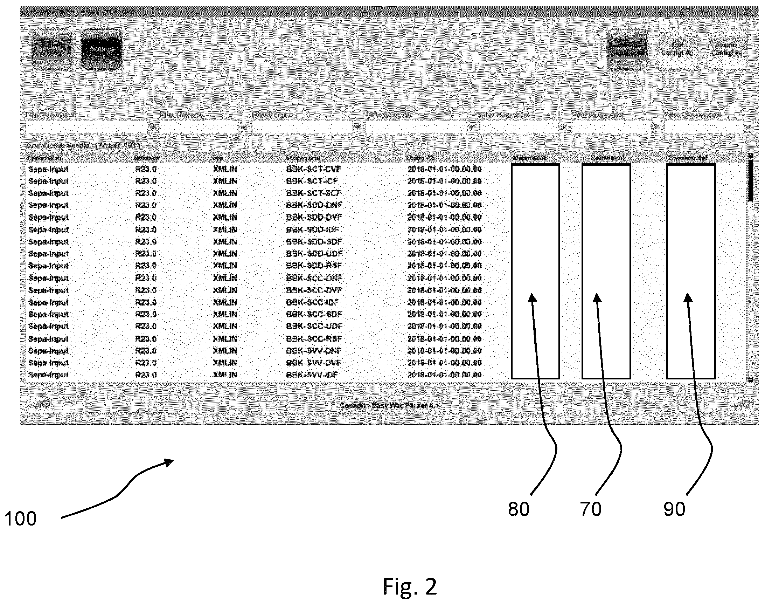

Fig. 2 bis 10 zeigen schematisch und exemplarisch Bildschirmausdrucke von Nutzerschnittstellen auf dem Nutzerendgerät 20.

In Fig. 2 wird exemplarisch eine Startoberfläche 100 als erste Nutzerschnittstelle gezeigt. Die Startoberfläche 100 listet für Strukturen verschiedener sicherheitsrelevanter Daten ein zugehöriges Rulemodul 70 und Mapmodul 80 auf, die überdie Benutzerstelle geprüft, überarbeitet und erstellt werden können. Optional können als mit Checkmodul bezeichnete Exitbausteine 90, die zusätzliche Informationen enthalten, zum Einsatz kommen

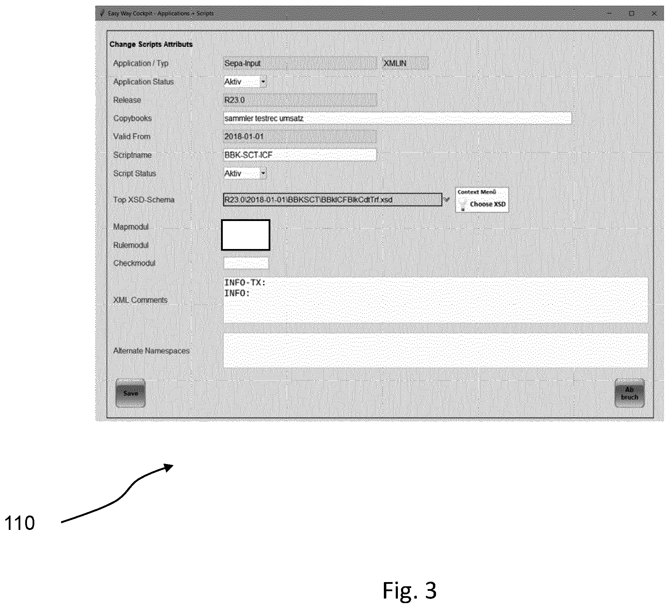

Fig. 3 zeigt eine beispielhafte Maske 110 als zweite Nutzerschnittstelle, die zur Änderung eines der in der Startoberfläche 100 angezeigten "Skripte", d.h. einer der Einträge in einer Zeile der Startoberfläche 100, ausgebildet ist.

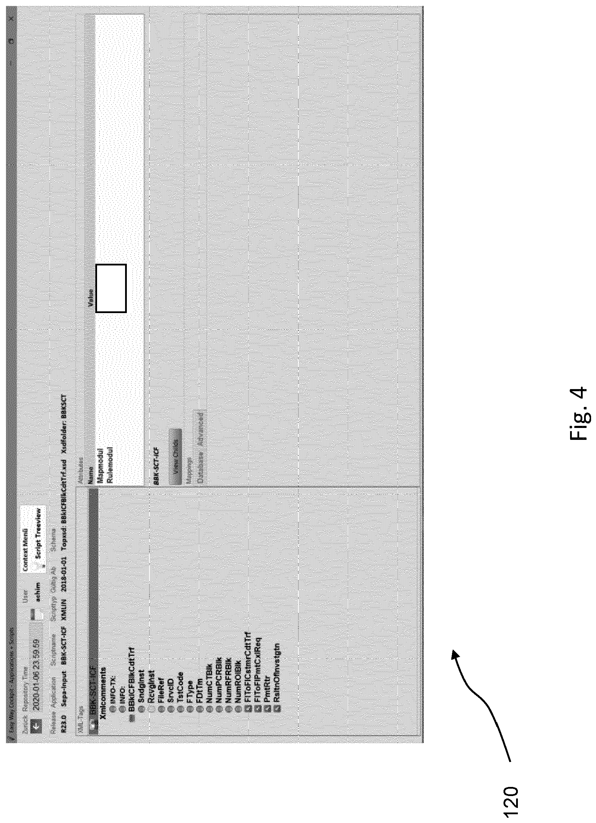

Fig. 4 zeigt eine beispielhafte Darstellung 120 einer XSD-Datenstruktur in Form eines "NavTree".

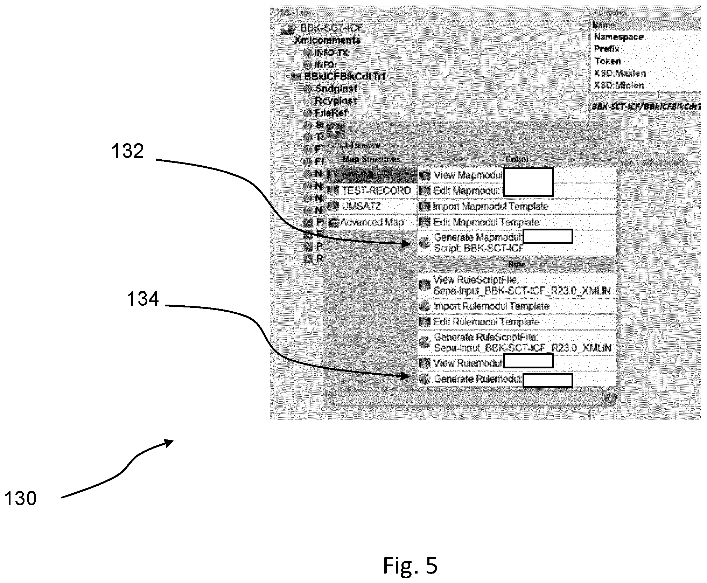

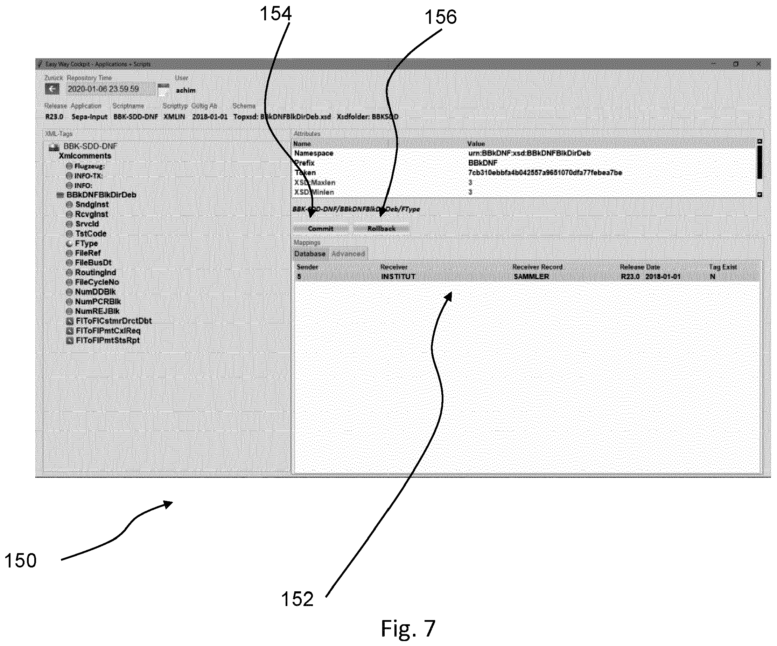

Fig. 5 zeigt ein Kontextmenü 130, das durch Auswahl eines XML-Tags in der Darstellung 120 erzeugt wird. Durch Auswahl der entsprechenden Funktionen 132, 134 kann das Mapmodul 80 bzw. das Regelmodul 70 der Testanwendung bzw. der Endanwendung erzeugt werden. Vorzugsweise wird automatisch eine Testanwendung erzeugt, wenn abgewandelte Anforderungen, vgl. Fig. 7, vorliegen, während eine Endanwendung erzeugt wird, wenn keine abgewandelten Anforderungen vorliegen.

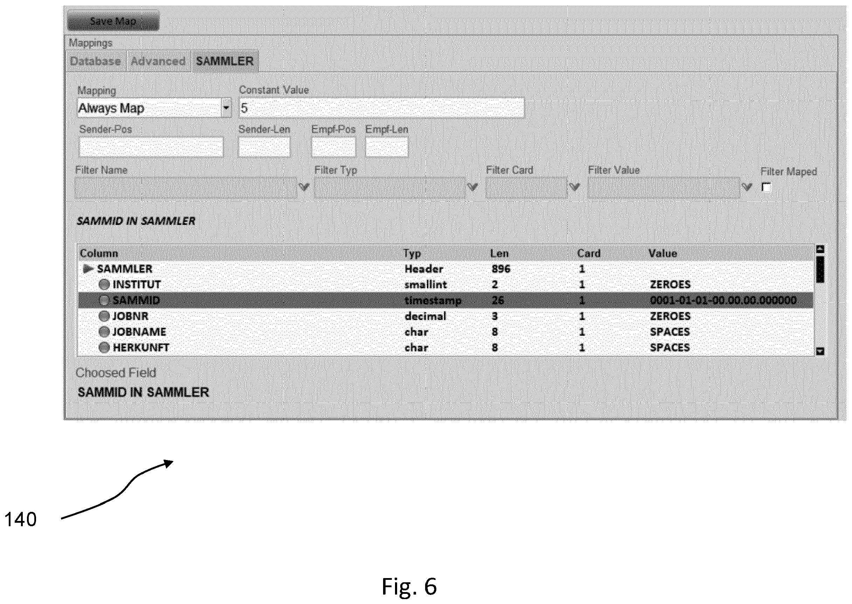

Fig. 6 zeigt eine fünfte Nutzerschnittstelle 140, die das Mapping definieren lässt, das dann von dem Mapmodul 80 umgesetzt wird.

Fig. 7 zeigt eine sechste Nutzerschnittstelle 150. Abgewandelte Anforderungen 152, die Unterschiede von den bisherigen festgelegten und konfigurierten Anforderungen beschreiben, werden in einer Liste angezeigt. Über einen Commit-Button 154 können die abgewandelten Anforderungen 152 akzeptiert werden, während sie über einen Rollback-Button 156, beispielsweise aufgrund einer Fehlerindikation des Funktionstestergebnisses, verworfen oder erneut angepasst werden können.

Hierbei sollte beachtet werden, dass die Testanwendung unter Berücksichtigung der abgewandelten Anforderungen 152 erzeugt wird, während die Endanwendung die abgewandelten Anforderungen 152 nicht berücksichtigt.

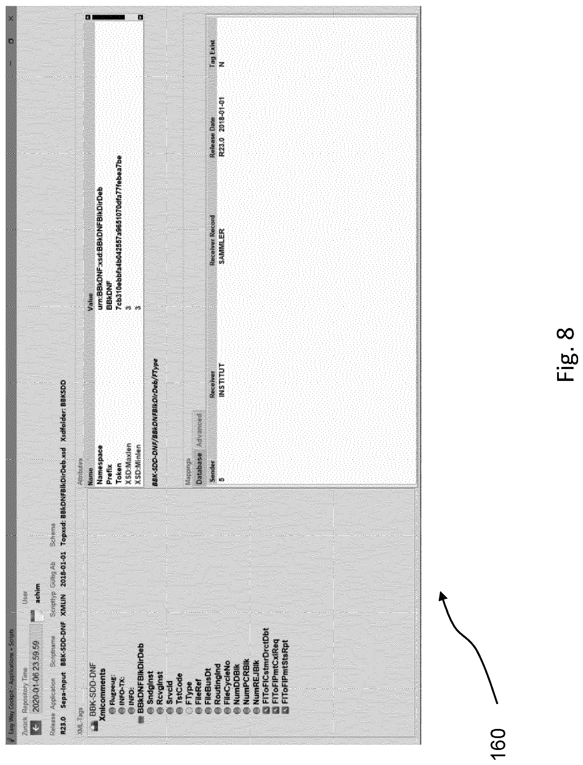

Fig. 8 zeigt eine siebte Nutzerschnittstelle 160, nachdem die abgewandelten Anforderungen 152 der Fig. 7 durch Bestätigen über den Commit-Button 154 akzeptiert wurden. Der Commit-Button 154 und der Rollback-Button 156 werden nicht angezeigt, da keine unbestätigten, abgewandelten Anforderungen mehr existieren.

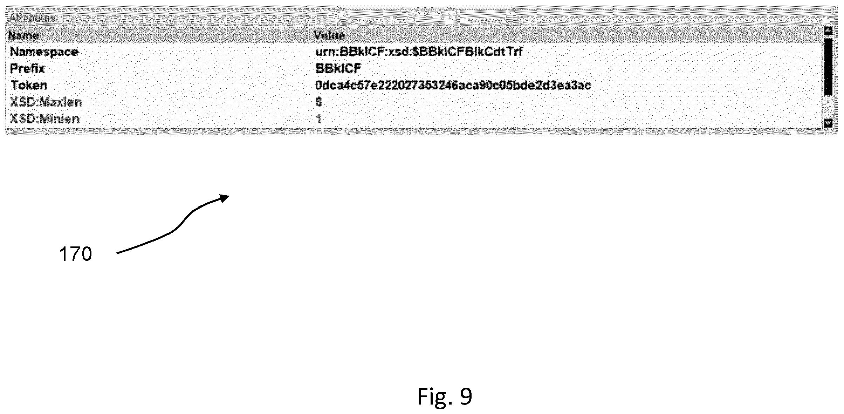

Fig. 9 zeigt eine achte Nutzerschnittstelle 170, mit der sonstige Attribute eines XML-Tags, das beispielsweise aus dem in den vorherigen Figuren gezeigten "NavTree" ausgewählt ist, veränderbar sind.

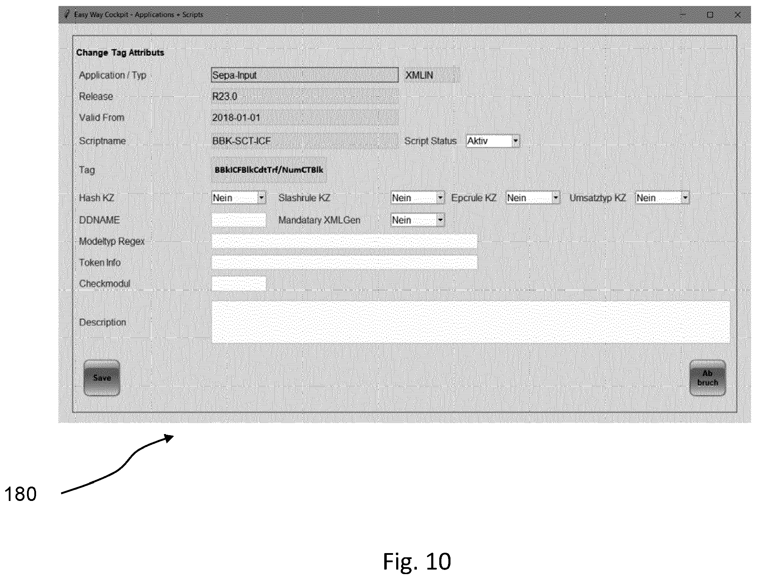

Fig. 10 zeigt eine neunte Nutzerschnittstelle 180, mit der sonstige Attribute individuell zugewiesen werden können. Damit kann letztlich die Funktionslogik hinter der Anwendung automatisch ergänzt werden.

Nachfolgend wird ein beispielhafter Datenfluss zwischen Server 10 (Master) und der Schnittstelle 20 (Cockpit) erneut in der Reihenfolge des Ablaufs beschrieben.
1. Der Host-Job 40 wird auf dem Server 10, beispielsweise IBM Mainframe Z/OS 390, gestartet.
2. Das Topmodul / Steuerungsmodul 50 des Host-Jobs ruft Parsermodul 60 auf
3. Das Parsermodul 60 liest Regelwerk (XSD und zusätzl. Infos) über ein passendes Regelmodul 70 ein.
4. Das Parsermodul 60 liefert geparste Daten und gibt Kontrolle an Topmodul zurück.
5. Das Topmodul ruft das Mapmodul 80 zur Bestückung der Datenstrukturen auf.
6. Das Topmodul ruft individuelles Buchungsmodul (firmenspezifischer Baustein) mit den bestückten Datenstrukturen auf.
7. Das Topmodul ruft wiederum das Parsermodul 60 auf, bis alle XML-Daten verarbeitet sind.

Analog zu den dargestellten Abläufen ist ein Ablauf möglich, bei dem das Parsermodul 60 XML-Daten generiert. Das Steuermodul liest die entsprechenden Daten aus dem HOST-Datenbestand und ruft den Parser auf mit der Funktion, die gewünschten XML-Daten zu generieren.

Aufruf eines Batchjobs auf Server 10, insbesondere IBM-Mainframe Z/OS 390, und Starten eines Steuerungsmoduls 50, beispielsweise ein Cobol Steuerungsmodul, das den Ablauf des gesamten Parsingprozesses sowie die Weiterverarbeitung der geparsten XML-Daten steuert.

Im Batchjob liest das Parsermodul 60 die XML-Datei, bei einer Online-Transaktion wird ein Steuerungsmodul 50 aufgerufen mit den XML-Daten im Hauptspeicher, die dann vom Parser genauso verarbeitet werden als kämen sie aus einer Datei.

Das Steuerungsmodul 50 (Topmodul) ruft das Parsermodul 60 mit der gewünschten Funktion (hier XML-Parsen) auf. Es erhält die Kontrolle vom Parser zurück, wenn Fehler in den XML-Daten vorhanden sind und kann diese dann protokollieren sowie das weitere Vorgehen entsprechend steuern.

Ebenso erhält es die Kontrolle zurück mit den geparsten XML-Daten zu einer bestimmten syntaktischen Einheit (z.B. Umsatz).

Die geparsten XML-Daten stehen nun in einer geordneten Struktur (es kann also als Vorgang der Umwandlung "Datenpool" in "verkettete Liste" verstanden werden) zur Verfügung und kann nun durch den Aufruf des Mapmoduls 80 weiterverarbeitet werden. Den Namen dieses Mapmoduls 80 (insbesondere mit indiv. Exit) wird ebenfalls vom Parsermodul 60 geliefert, da dieser über das gelesene Regelwerk Kenntnis darüber besitzt.

Dieses Mapmodul 80 (beispielsweise Cobol, ohne jedoch darauf beschränkt zu sein) wird vorher vollständig im Cockpit (PC-CASE-TOOL) generiert, dann zum Host transferiert und vor Nutzung auf dem Server 10 compiliert.

Ein manuelles Programmieren des Mapmoduls 80 ist nicht mehr notwendig, was gleichzeitig eine Zeitersparnis ermöglicht und Qualität automatisch gewährleistet.

Durch diese Technik, das nämlich Exitbausteine (hier das Mapmodul 80) automatisch durch das Cockpit zur Verfügung gestellt werden können, die das Parsermodul 60 über das Regelwerk kennt und somit der Anwendung gezielt zur Verfügung stellt, ist eine Datenverarbeitung auf völlig neuem Niveau möglich - das heisst: die Daten bestimmen ihre Weiterverarbeitung selbst, sodass komplexe Ablaufprozesse nun voll automatisch sowie überprüfbar fehlerfrei ablaufen können.

In dem gesamten Ablauf ist es vorzugsweise auch möglich, weitere Exitbausteine (generierte Module) zur Verfügung zu stellen, die dann ebenso gezielt aufgerufen werden können (wie das Mapmodul 80), um entsprechende Aufgaben/Probleme zu lösen. Derartige weitere Module umfassen beispielsweise ein Cross-Referenz Plausibilitäts Bankmodul je nach Kundenwunsch.

Ohne die erfindungsgemäße Lösung ist dies sonst nur durch umfangreiche manuelle Evaluationsprogrammierung möglich, die durch Programmierer aufwendig und zeitintensiv erstellt werden muss und demnach erheblich mögliche Fehlerquellen impliziert.

Das Parsermodul 60 liest insbesondere einmalig über ein entsprechendes Regelmodul 70 bzw. Rulefile das zutreffende XSD-Regelwerk für das zu verarbeitende XML-Dokument ein.

Der Nutzer entscheidet, ob er für den Parserprozess das Regelmodul 70 oder das entsprechende Rulefile benutzt. Beides ist möglich - normalerweise wird das Regelmodul 70 genutzt, da das Parsermodul 60 nicht im Batch, sonder auch Online genutzt wird. Bei Online-Transaktionen darf üblicherweise kein Rulefile gelesen werden, also nutzt man das Rulemodul. Das Rulefile ist aber oft im Batch zu Testzwecken sehr gut zu gebrauchen.

Das zugehörige Regelwerk sucht das Parsermodul 60 vorzugsweise über identifizierende Namespace Daten, die im XML-Stream vorhanden sein müssen, ansonsten gibt es aussagekräftige Fehlermeldungen.

Das Regelmodul 70 bzw. Rulefile werden vorher vollständig Cockpit generiert, und dann zum Host transferiert. Das Regelmodul 70 muss vor Nutzung auf dem Server 10 compiliert weden.

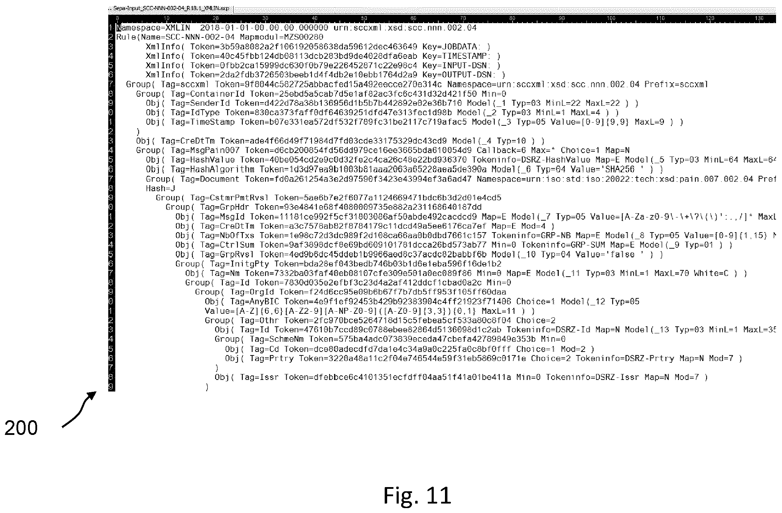

Fig. 11 zeigt schematisch und exemplarisch einen Auszug 200 eines Beispiel Regelwerkes im Rulefile: Beispiel Namespace: urn:sccxml:xsd:scc.nnn.002.04.

Dieses Regelwerk-Script basiert vorzugsweise auf einer einfachen Spezifikationssprache mit Schlüsselwörtern, die das Parsermodul 60 kennt. Es repräsentiert die zutreffende XSD-Spezifikation (XSD Schema/Regelwerk) zur entspr. XML-Datei mit angereicherten Parametern (zb. Callback=0), die zur Gesamtverarbeitung benötigt werden.

Dieses Regelwerk-Script wird vom Parser rekursiv gescannt (gelesen), um alle Objekte (Tags) zu erhalten und diese in ein sehr schnell zu verarbeitendes internes Format zu überführen.

Dabei handelt es sich beispielsweise um Instanzen einer Klasse, die alle miteinander horizontal als auch vertikal miteinander verknüpft sind (interne Adr.-Pointer). Diese erstellte Objektstruktur bildet die Basis für eine ultraschnelle validierende XML-Verarbeitung. Dieser Prozess findet wie oben erwähnt vorzugsweise nur einmalig statt.

Das Parsermodul 60 liest und parst alle XML-Daten bis zu einem definierten Synchronisationspunkt (zb. Umsatz) und übergibt dann die Verarbeitungskontrolle vorerst wieder an das Steuerungsmodul 50 zurück.

Dieser Synchronisationspunkt wird im Regelwerk vorzugsweise durch einen Parameter CALLBACK=RC definiert. Das Parsermodul 60 ist dadurch in der Lage, seine Arbeit zu unterbrechen und die Kontroll beispielsweise an das Topmodul abzugeben.

Das Topmodul bzw. Steuerungsmodul 50 kann dann den Callback-Code auswerten und damit gezielte Gruppenwechsel-Steuerungen elegant vornehmen. (z.b. neuer Sammler, neuer Umsatz etc.).

Bei dem Parsermodul 60 handelt es sich vorzugsweise um einen hocheffizienten Pull-Mehrschritt-Parser, bei der das Topmodul die Kontrolle über den eigentlichen Parserprozess behält.

Nach Anforderung seitens des Topmoduls (Aufruf Parser) erhält diese die Kontrolle zurück, wenn eine syntaktische Einheit geparst ist, beispielsweise mittels eines sogenannten Callback-Code.

Die geparsten Daten, d.h. XML-Daten, stehen nun in einer geordneten Struktur zur Verfügung und können durch den Aufruf eines Exit-Bausteins weiterverarbeitet werden. Die geordnete Struktur kann beispielsweise das Ergebnis der Umwandlung eines Datenpools in eine verkettete Liste sein.

Das Parsermodul 60 validiert alle XML-Tags gegen das Regelwerk - Inhalte der Tags werden ebenso nach der vorhandenen Regel validiert. Die vorhandene Regel kann beispielsweise einen regulären Ausdruck umfassen.

Das Ergebnis dieser Validierung wird vorzugsweise ebenfalls mit den geparsten Daten zur Verfügung gestellt.

Erhält das Steuerungsmodul 50 die Kontrolle vom Parsermodul 60 zurück - alle Tags zu einer syntaktischen Einheit sind geparst - ruft dieses dann das erhaltende Mapmodul 80 auf, um die geparsten XML-Daten auf die individuellen Datenstrukturen zu bestücken. Das kann beispielsweise als "Customizing" in dem Cockpit bezeichnet werden.

Die geparsten XML-Daten stehen in einer geordneten Struktur (Datenpool -> verkettete Liste) zur Verfügung und können nun beispielsweise durch den Aufruf den Mapmoduls 80 weiterverarbeitet werden.

Das Topmodul ruft nun optional einen individuellen Buchungs-Baustein (firmenspezifisch) mit den zuvor bestückten Datenstrukturen auf, um die geparsten Daten in das firmenspezifische Verarbeitungssystem zu speichern bzw. weiter zu verarbeiten.

Im Anschluss ruft das Topmodul wiederum das Parsermodul 60 auf, bis alle XML-Daten verarbeitet sind bzw. ein Parserfehler aufgetreten ist. Es kann aber auch den Parserprozess in bestimmten Fällen selbst beenden, wenn nicht alle XML-Daten geparst werden müssen.

### Ablauf und Funktionstest

Der Anwender startet auf dem HOST / Mainframe, d.h. dem Server 10, den entsprechenden Job (beispielsweise im Batch), um die entsprechende XML-Datei zu verarbeiten, damit diese Daten in ein Buchungssystem des Kunden gespeichert werden oder eine andere für die Daten vorgesehene Funktion durchgeführt wird. Die XML-Datei wird im Job spezifiziert als auch der Aufruf des Topmoduls.

Für einen erfolgreichen Jobablauf müssen natürlich das Topmodul 40, Regelmodul 70 bzw. Rulefile sowie die notwendigen Mapmodule 80 auf den Server 10 - compiliert zur Verfügung stehen.

Nach Beendigung des Jobablaufes kann der Anwender im Job-Output zuerst erkennen, ob Parserfehler bzw. Validierungsfehler in den XML-Daten aufgetreten sind. Der Anwender muss bei dieser Fehlersituation, die XML-Daten korrigieren lassen und danach die Verarbeitung wiederholen.

Sind keine dieser Fehler aufgetreten, muss der Anwender seinen veränderterten Buchungsbestand im auf dem Server 10 kontrollieren, ob alle Daten aus der XML-Datei (Umsätze) ordnungsgemäß, inhaltlich korrekt gespeichert worden sind. Grundlage hierfür sind die entsprechenden Mapping-Zuordnungen im Cockpit 20 zu den entsprechenden XSD-Scripten (Taginhalt -> Feld in Datenstruktur).

Ebenfalls können bestimmte Prüfsummen dazu beitragen, den Testvorgang zu evaluieren. Stellt der Anwender beispielsweise in den gespeicherten Umsätzen Fehler fest, kontrolliert er die entsprechenden Mapping-Zuordnungen im Cockpit 20 und nimmt ggf. Korrekturen bei der Mapping-Zuordnung vor. Danach generiert er die entsprechenden Mapmodule 80 im Cockpit 20 neu, überträgt diese auf den HOST, compiliert diese und testet neu.

Liegt der Fehler nicht bei falschen Map-Zuordnungen, sondern beispielsweise im firmenspezifischen Baustein, muss natürlich dieser Modulbaustein analysiert werden. Zusätzlich kann der Host-Job 40, insbesondere das Top-Modul alle gelieferten Werte des Parsers protokollieren, um sicherzustellen, das das Parsermodul 60 alle Daten vollständig und korrekt liefert.

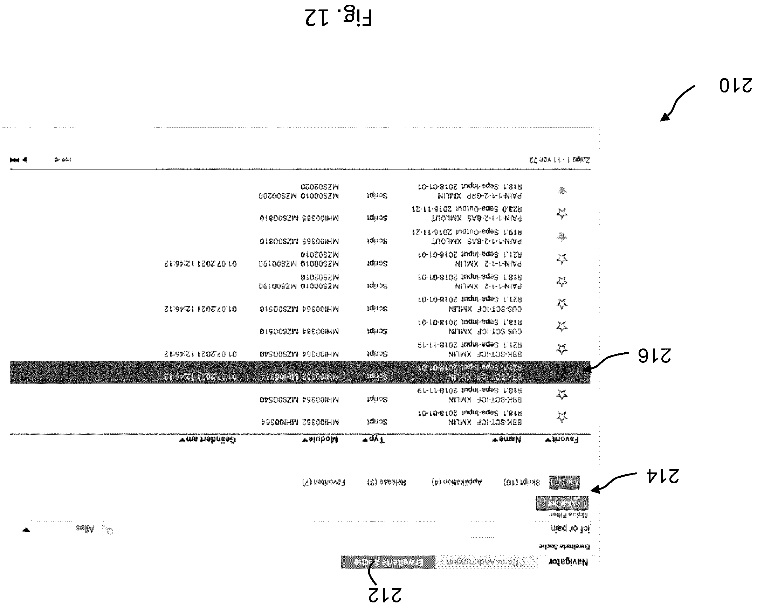

Fig. 12 zeigt schematisch und exemplarisch einen Auszug aus einer Benutzeroberfläche 210, zu welcher der Anwender nach Starten des Cockpits 20 beispielsweise über ein Dashboard in einen Arbeitsbereich und einen Klick auf einen "Reiter Erweiterte Suche" 212 gelangt. Hier sucht er sich die Scripte über Filterfunktionen 214 aus, mit denen er arbeiten will.

Die aktuelle Zeile 216 kann bei Mausbewegung hervorgehoben werden. Nach kurzer Verzögerung können in dieser Zeile 216 bestimmte Verarbeitungs-Buttons 218, 220, 222 erscheinen, denen beispielsweise Farben gelb, grün, rot zugeordnet sind.

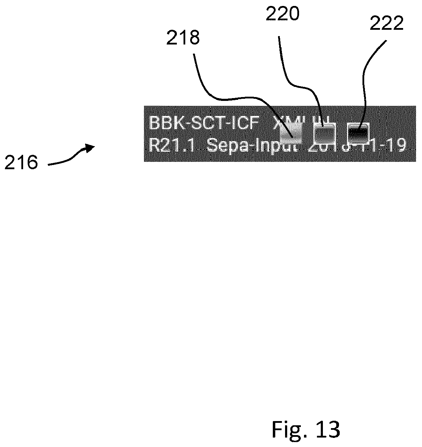

Fig. 13 zeigt schematisch und exemplarisch einen Auszug aus der Zeile 216, bei der die Buttons 218, 220 und 222 eingeblendet sind.

Bei Click auf den gelben Button 218 kann insbesondere folgender Dialog erscheinen:
- Anzeige der Datenstruktur des XML-Scriptes in Treeview (analog XSD)
- Anzeige der entspr. Attribute des Tags
- Anzeige der Mapping-Zuordnungen des Tags
- Anzeige weiterer Reiter wie Sub-Tags etc.

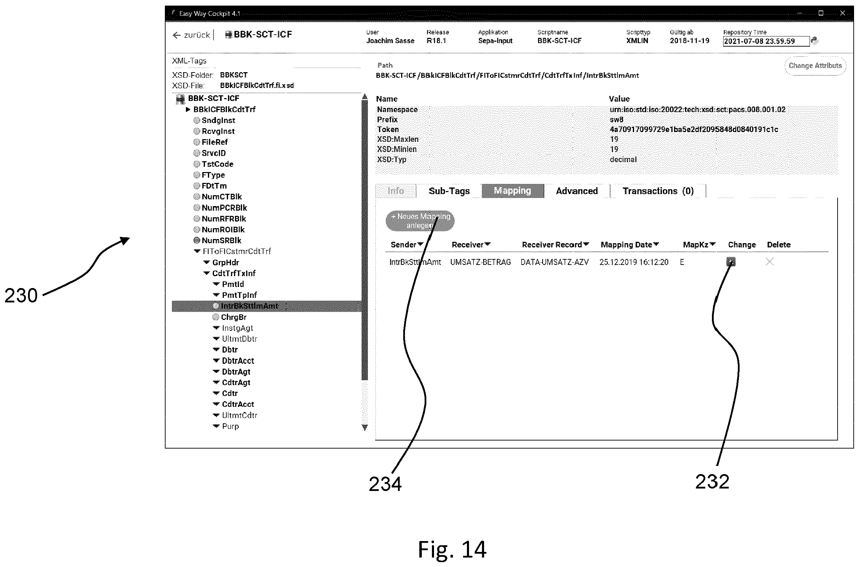

Fig. 14 zeigt schematisch und exemplarisch eine Nutzerschnittstelle 230, in der eine Mapping-Zuordnung des Tags "IntrBkSttlmAmt" auf das Datenfeld: UMSATZ-BETRAG IN DATA-UMSATZ-AZV dargestellt wird.

Mapkz ist hier beispielsweise ein Parameter, der die Verarbeitung der Taginhalte weiter konkretisiert. Beispielsweise kann Mapkz in einer Ausführung je einen der Werte E, A, F oder N annehmen.
Mapkz = E, wie in dem Beispiel der Fig. 14 gezeigt → Taginhalt wird bei Existenz und korrekter Validierung auf das Datenfeld gemappt.
Mapkz = A → Taginhalt wird immer auf das Datenfeld gemappt.
Mapkz = F → Taginhalt wird bei Existenz und fehlerhafter Validierung auf das Datenfeld gemappt.
Mapkz = N → Konstante wird bei Nicht-Existenz auf das Datenfeld gemappt.

Ein Klick auf einen Change-Button 232 bzw. auf einen Button "Neues Mapping" 234 kann der Anwender eine Mapping-Zuordnung hinzufügen oder ändern. Hierzu wird eine Nutzerschnittstelle 240, die auch als Mapping-Editor Dialog 240 bezeichnet wird, aufgerufen.

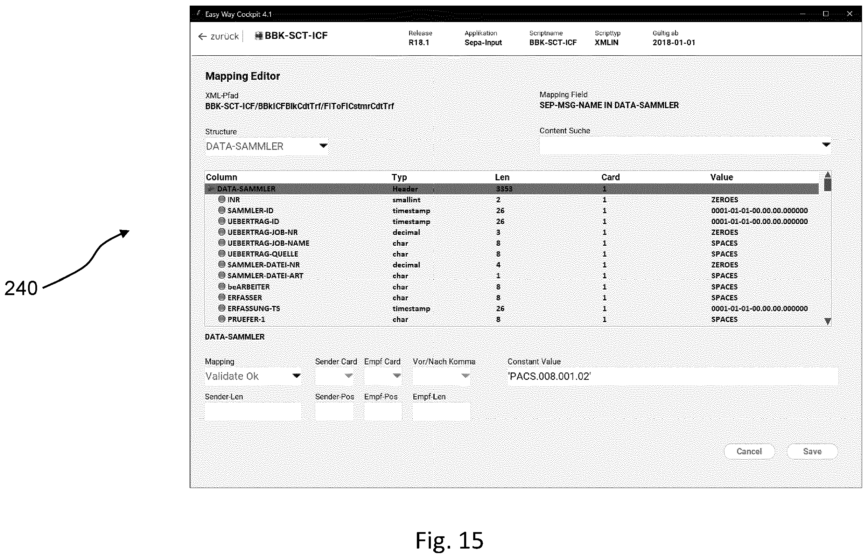

Fig. 15 zeigt schematisch und exemplarisch die Nutzerschnittstelle 240. Die Mapping-Zuordnung findet sich dann in einer entsprechenden Codierungssequenz im Mapmodul 80 wieder, nachdem dieses generiert worden ist. Das Mapmodul 80 enthält für jedes gelieferte "Tag" die Information vom Parsermodul 60, ob die Validierung erfolgreich war oder nicht. Das Parsermodul 60 kennt über das Regelwerk des "Tags", mit welcher Regel dieses validiert werden soll.

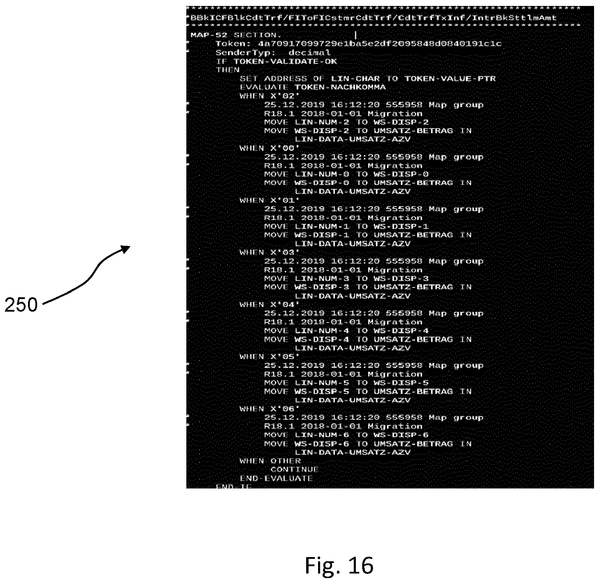

Fig. 16 zeigt schematisch und exemplarisch einen Auszug 250 aus einem solchen beispielhaften Regelwerk des Mapmoduls 80.

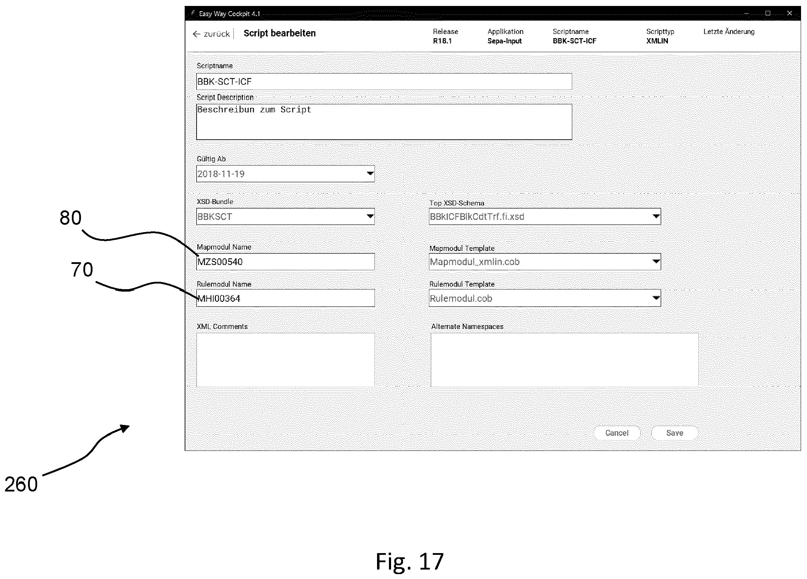

Fig. 17 zeigt schematisch und exemplarisch eine Nutzerschnittstelle 260, die bei Click auf den grünen Button 220, vgl. Fig. 13, erscheinen kann. Die Nutzerschnittstelle 260 enthält einen Dialog "Script bearbeiten" zur Anzeige aller Attribute zum ausgewählten Script.

In der Nutzerschnittstelle 260 kann der Anwender unter anderem den Namen für das Mapmodul 80 und Regelmodul 70 festlegen. Unter diesen Namen werden Mapmodul 80 + Regelmodul 70 später auf dem Server 10 zur Verfügung stehen. Da diese Module automatisch im Cockpit 20 generiert werden, müssen die Namen administriert werden.

Jedes Script bekommt ein Mapmodul 80 zugeordnet. Das gleiche Regelmodul 70 kann mehreren Scripten zugeordnet werden - dieses enthält dann mehrere Regelwerke für unterschiedliche Scripte. Das Regelmodul 70 wird im Parsingprozess benötigt, damit das Parsermodul 60 die Regelwerke entsprechender Scripte kennt.

Neben den Modulnamen werden für Mapmodul 80 und Regelmodul 70 vorzugsweise ein Template-File zugeordnet. Dieses Template-File stellt jeweils den entsprechenden Programmrahmen dar, in diesen alle variablen Teile hineingeneriert werden.

Auch kundenspezifische Steuerdaten zu einem Modul, beispielsweise Compileroptionen, können mit Hilfe dieser Programmrahmen berücksichtigt werden.

Die Template-Files werden vorzugsweise extern in einem Dateiverzeichnis für das Release für Mapmodul 80 und Regelmodul 70 zur Verfügung gestellt, sodas im "Script-Bearbeiten Dialog", d.h. der Nutzerschnittstelle 260, nur noch eine Zuordnung über das entsprechende Contextmenü vorgenommen werden muss.

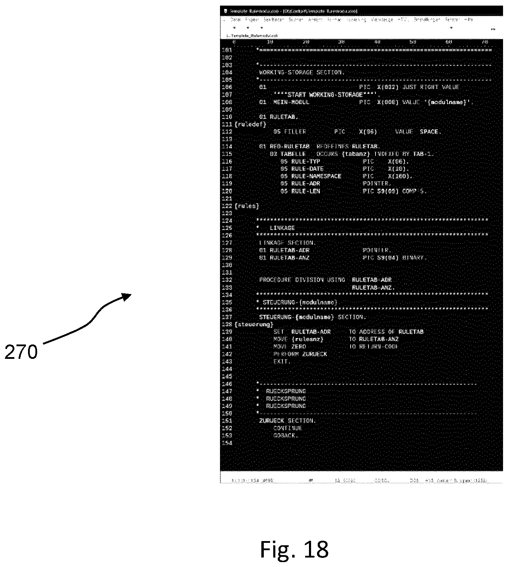

Fig. 18 zeigt schematisch und exemplarisch einen Auszug 270 aus einem Template-File, das zur Verwendung beispielsweise für ein Regelmodul 70 geeignet ist. In diesem Beispiel stehen Namen mit geschweiften Klammern für dynamische Variablen, die bei Generierung ersetzt werden.

## Patentansprüche

1. Verfahren zum Bereitstellen von sicherheitsrelevanten XML-Daten mittels eines Serversystems, das ein Großrechner im Bereich von Finanzdienstleistungen ist, umfassend:
a) Festlegen und Konfigurieren, auf einem Nutzerendgerät in einem Regelmodul (70), von Anforderungen hinsichtlich zumindest einer Vorgabe für die sicherheitsrelevanten XML-Daten, wobei die zumindest eine Vorgabe ein XSD Schema umfasst,
b) Festlegen und Konfigurieren, auf dem Nutzerendgerät in dem Regelmodul (70), von abgewandelten Anforderungen basierend auf der Anforderung,
c) Erzeugen, auf dem Nutzerendgerät, einer Testanwendung umfassend das Regelmodul (70) und ein Mapmodul (80) basierend auf dem Festlegen und dem Konfigurieren der abgewandelten Anforderungen, wobei das Mapmodul eingerichtet ist, die sicherheitsrelevanten XML-Daten unterschiedlichen Kategorien zuzuweisen,
d) Übermitteln der Testanwendung an einen Server,
d1) Compilieren der Testanwendung auf dem Server,
e) Ausführen (S1), durch den Server mittels eines Steuerungsmoduls (50), der Testanwendung umfassend das Regelmodul (70) und das Mapmodul (80) zur Durchführung eines Funktionstests, wobei:
e1) das Steuermodul einen Parser (60), zum Parsen der sicherheitsrelevanten XML-Daten aufruft (S2), wobei der Parser zum Parsen der sicherheitsrelevanten XML-Daten das Regelmodul (70) aufruft (S3) und der Parser die geparsten sicherheitsrelevanten XML-Daten, durch Abgleich der XML-Tags mit dem Regelwerk des Regelmoduls, validiert,
e2) wobei im Anschluss die Kontrolle an das Steuermodul (50) zurückgegeben wird, wobei ein Funktionsergebnis erhalten wird (S4),
e3) das Steuermodul das Mapmodul zur Bestückung der Datenstrukturen aufruft (S5),
f) Übermitteln des Funktionstestergebnisses an das Nutzerendgerät, in Abhängigkeit des Funktionstestergebnisses,
g1) Akzeptieren der abgewandelten Anforderungen als Anforderungen, auf dem Nutzerendgerät, oder
g2) Anpassen der abgewandelten Anforderungen ausgehend von den abgewandelten Anforderungen, auf dem Nutzerendgerät,
h) Erzeugen, durch das Nutzerendgerät, einer Endanwendung, umfassend ein Regelmodul (70) und ein Mapmodul (80), basierend auf dem Festlegen und dem Konfigurieren der Anforderungen, um eine Endanwendung zu erzeugen, und
i) Übermitteln, durch das Nutzerendgerät, der Endanwendung an den Server.

2. Verfahren nach Anspruch 1, wobei das Nutzerendgerät Unterschiede zwischen festgelegten und konfigurierten Anforderungen sowie abgewandelten Anforderungen hervorhebt.

3. Verfahren nach Anspruch 2, wobei das Nutzerendgerät in Abhängigkeit des Funktionstestergebnisses ein Annehmen oder Revidieren der Unterschiede ermöglicht.

4. Verfahren nach zumindest einem der vorstehenden Ansprüche, wobei die Durchführung des Funktionstests umfasst:
a) Erzeugen, auf dem Server, des Funktionstestergebnisses für die Testanwendung, und
b) Übermitteln, an das Nutzerendgerät, des Funktionstestergebnisses,
c) Anpassen, auf dem Nutzerendgerät, der abgewandelten Anforderungen für die sicherheitsrelevanten Daten in Antwort auf das Funktionstestergebnis, und
d) Ändern, durch das Nutzerendgerät, der Testanwendung basierend auf dem Anpassen.

5. Verfahren nach Anspruch 4, wobei das Funktionstestergebnis eine Fehlerindikation umfasst.

6. Verfahren nach zumindest einem der vorherigen Ansprüche, wobei das Anpassen der Anforderungen in Echtzeit durchgeführt wird.

7. Verfahren nach zumindest einem der vorherigen Ansprüche, wobei das Ändern der Testanwendung iterativ durchgeführt wird.

8. Verfahren nach zumindest einem der vorherigen Ansprüche, ferner ein Ausführen der Endanwendung auf dem Server umfassend, wobei das Ausführen der Endanwendung umfasst:
a) Zuweisen der sicherheitsrelevanten Daten zu unterschiedlichen Kategorien, und
b) Validieren von kategorisierten sicherheitsrelevanten Daten.

9. Verfahren nach zumindest einem der vorherigen Ansprüche, wobei die sicherheitsrelevanten Daten XML-Daten umfassen, und die zumindest eine Vorgabe ein XSD Schema umfasst.

10. System zum Bereitstellen von sicherheitsrelevanten Daten, umfassend:
einen Server, und
ein Nutzerendgerät,
wobei das Nutzerendgerät eingerichtet ist, zum
a) Festlegen und Konfigurieren in einem Regelmodul (70) von Anforderungen hinsichtlich zumindest einer Vorgabe für die sicherheitsrelevanten XML-Daten, wobei die zumindest eine Vorgabe ein XSD Schema umfasst,
b) Festlegen und Konfigurieren in dem Regelmodul (70) von abgewandelten Anforderungen basierend auf der Anforderung,
c) Erzeugen einer Testanwendung umfassend das Regelmodul (70) und ein Mapmodul (80) basierend auf dem Festlegen und dem Konfigurieren der abgewandelten Anforderungen, wobei das Mapmodul eingerichtet ist, die sicherheitsrelevanten XML-Daten unterschiedlichen Kategorien zuzuweisen,
d) Übermitteln der Testanwendung an einen Server,
d1) Compilieren der Testanwendung auf dem Server,
wobei der Server eingerichtet ist zum
e) Ausführen (S1) der Testanwendung umfassend das Regelmodul (70) und das Mapmodul (80) zur Durchführung eines Funktionstests mittels eines Steuerungsmoduls (50) des Servers, wobei
e1) Aufrufen eines Parsers (60) durch das Steuermodul (50), zum Parsen der sicherheitsrelevanten XML-Daten (S2), wobei der Parser zum Parsen der sicherheitsrelevanten XML-Daten das Regelmodul (70) aufruft (S3), und der Parser die geparsten sicherheitsrelevanten XML-Daten, durch Abgleich der XML-Tags mit dem Regelwerk des Regelmoduls, validiert,
e2) wobei im Anschluss die Kontrolle an das Steuermodul (50) zurückgegeben wird, wobei ein Funktionsergebnis erhalten wird (S4),
f) Übermitteln des Funktionstestergebnisses an das Nutzerendgerät,
wobei das Nutzerendgerät weiter eingerichtet ist, in Abhängigkeit des Funktionstestergebnisses, zum:
g1) Akzeptieren der abgewandelten Anforderungen als Anforderungen oder
g2) Anpassen der abgewandelten Anforderungen ausgehend von den abgewandelten Anforderungen.
h) Erzeugen einer Endanwendung, umfassend ein Regelmodul (70) und ein Mapmodul (80), basierend auf dem Festlegen und dem Konfigurieren der Anforderungen, um eine Endanwendung zu erzeugen, und
i) Übermitteln der Endanwendung an den Server.

11. System nach Anspruch 10, wobei der Server umfasst:
a) ein Steuermodul, das eingerichtet ist, ein Funktionstestergebnis für die Testanwendung zu erzeugen, und
b) eine Kommunikationsschnittstelle, die eingerichtet ist, das Funktionstestergebnis an das Nutzerendgerät zu übermitteln.

12. System nach einem der Ansprüche 10 und 11, wobei der Server ferner ein Zuweisungsmodul umfasst, welches eingerichtet ist, die sicherheitsrelevanten Daten zu unterschiedlichen Kategorien zuzuweisen, wobei das Steuermodul eingerichtet ist, die kategorisierten sicherheitsrelevanten Daten zu validieren.

13. Computerprogrammprodukt, umfassend Programmcodemittel, die, wenn sie auf einer Prozessoreinheit ausgeführt werden, den Prozessor veranlassen, das Verfahren gemäß einem der Ansprüche 1 bis 9 auszuführen.
